(19) **Europäisches Patentamt European Patent Office Office européen des brevets**

(11) **EP 2 931 665 B1**

(12) **EUROPEAN PATENT SPECIFICATION**

(45) Date of publication and mention
of the grant of the patent:
**27.04.2016 Bulletin 2016/17**

(21) Application number: **13789836.7**

(22) Date of filing: **15.11.2013**

(51) Int Cl.:
*C02F 1/469* *(2006.01)*    *C02F 1/461* *(2006.01)*
*C02F 1/46* *(2006.01)*    *H01B 1/24* *(2006.01)*
*H01B 13/00* *(2006.01)*    *C02F 103/10* *(2006.01)*
*C02F 101/10* *(2006.01)*

(86) International application number:
**PCT/EP2013/073952**

(87) International publication number:
**WO 2014/090508 (19.06.2014 Gazette 2014/25)**

(54) **IMPREGNATED ELECTRODE FOR CAPACITIVE DEIONISATION, PROCESS FOR PREPARING THE ELECTRODE AND ITS USE IN WATER TREATMENT AS WELL AS APPARATUS EMPLOYING THE ELECTRODES**

IMPRÄGNIERTE ELEKTRODE FÜR KAPAZITIVE ENTIONISIERUNG, VERFAHREN ZU SEINER HERSTELLUNG UND VORRICHTUNG MIT ELEKTRODEN SOWIE VERWENDUNG DER ELEKTRODEN IN WASSERBEHANDLUNG

ÉLECTRODE IMPRÉGNÉE POUR DÉSIONISATION CAPACITIVE, PROCÉDÉ DE SA PRÉPARATION, SON UTILISATION DNAS LE TRAITEMENT D'EAU ET DISPOSITIF UTILISANT LES ÉLECTRODES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.12.2012 EP 12196471**

(43) Date of publication of application:
**21.10.2015 Bulletin 2015/43**

(73) Proprietors:
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC**
**London, Greater London EC4Y 0DY (GB)**
Designated Contracting States:
**CY GB IE MT**

(72) Inventors:
• **ALENCHERRY, Tinto Johnichan**
**Bangalore 560 066 (IN)**
• **GHOSH, Somnath**
**Bangalore 560 066 (IN)**
• **RAJANARAYANA, Venkataraghavan**
**Bangalore 560 066 (IN)**

(74) Representative: **van den Brom, Coenraad Richard
Unilever Patent Group
Olivier van Noortlaan 120
3133 AT Vlaardingen (NL)**

(56) References cited:
**EP-A1- 2 070 875**    **WO-A1-2004/074189**
**WO-A2-2008/016671**    **DE-A1- 10 013 457**
**US-A1- 2012 187 054**

Remarks:
The file contains technical information submitted after the application was filed and not included in this specification

**Description**

**FIELD OF THE INVENTION**

The invention relates to electrodes for capacitive deionisation.

**BACKGROUND OF THE INVENTION**

Several technologies are available for the purification of water. The list includes ultraviolet (UV) radiation, chemical purification agents like hypochlorite salts as well as the use of various membranes. The listed technologies do not provide deionisation. However other methods such as distillation, reverse-osmosis, capacitive deionisation and ion-exchange resins do provide deionisation.

Deionisation becomes necessary if water contains a lot of dissolved solids, often measured as the TDS of water (Total Dissolved Solids). Purifiers which deionise water generally have an in-built mechanism (e.g. conductivity meter) to sense the total dissolved solids. As long as the total dissolved solids is below the pre-set limit, the user can collect purified water through the dispensing port/tap. A stage comes when even the purified water exceeds this pre-set limit. At this stage, the sensor immediately senses the change and cuts-off the supply of water to the port/tap. The water is then diverted to an outlet meant for wastewater. This pre-defined level ($TDS_{set}$) is usually fixed after taking into account the average TDS of input water and the average TDS of purified water which is desired by consumers. Some amount of TDS in water is necessary for good taste.

During a typical process of capacitive deionisation, water flows through one or more pairs of oppositely charged electrodes during which ions which are present in water get attracted and adsorbed to the surface of electrodes. This phenomenon results in a drop in the TDS. Adsorption is a surface phenomenon which is limited by the available surface area of the electrodes. Commercial water purifiers containing capacitive deionisation electrodes usually contain an arrangement of a number of electrodes which are cyclically charged and discharged. The water flowing through this stack of electrodes gets continuously deionised during charging cycle.

However, the performance of any electrode generally drops over a period of use. Then the device is no longer able to provide the desired degree of reduction in the TDS. This is believed to be due to deposition of salts on to the electrodes. This phenomenon affects usable life of the electrodes. However, consumers want longer lasting electrodes.

In the process of capacitive deionization, the purity of water is ascertained by a predecided parameter called $TDS_{set}$. Water containing more TDS than the set value is considered impure and thereby not suitable for consumption. In other words, such water contains higher amount of dissolved solids, primarily inorganic salts which renders it non-potable. Conversely, so long as the TDS of purified (or output) water is less than the $TDS_{set}$, the water remains fit for consumption.

Performance of any CDI system is gauged by two parameters.

The first is the degree of reduction in the TDS brought about by the system and the second is called recovery which is defined as the ratio of purified water to the total intake of water.

A preferred electrode is that which continues to offer pure water for as long a time as possible, with higher recovery and which is consistent at providing more TDS removal.

US2012187054A1 (SAMSUNG ELECTRONICS CO LTD) discloses the use of a metal absorbing material on electrodes to remove metals contaminants from input water through adsorption.

EP1601617B1 (MORGANITE ELECT CARBON) discloses inclusion of metals in electrodes to leach metals into the water by electrolysis to form electro-flocculants to reduce turbidity of the input impure water. A representative electrode has 1 to 90 % graphite based carbon matrix and up to 40% metal such as aluminium, copper, silver, nickel, iron.

WO2008016671 A1 (Quos Inc, US) discloses carbon-based composite electrode made of a resin binder, carbon black and/or graphite as active adsorbents and metal oxides as adsorbent promoters. It is indicated that some amount of metals liked silver or gold may also be added to the electrodes for better conductivity.

DE10013457 A1 (Noack Andreas, 2001) discloses an apparatus for purifying water comprises a housing and at least two opposing electrically charged electrodes, one comprising a porous carbon membrane on a porous support. Apparatus for purifying water comprises a housing and at least two opposing electrically charged electrodes, one comprising a porous carbon membrane on a porous support.

Electrodes in the former case are meant for the removal of metallic micro-contaminants but not intended for the reduction of inorganic salts/ TDS. In the latter case, the electrodes are used to leach metal ions into water for electro flocculation, which is a method for reduction of turbidity. It does not address any technical problem about reduction in inorganic salts or the TDS.

An object of the invention is to provide an electrode which gives enhanced recovery as well as higher TDS removal.

## SUMMARY OF THE INTENTION

It has been determined that at least some of the problems can be solved if the adsorbent medium is pre-impregnated with a specified amount of a substance selected from gold, sliver, copper and platinum.

Therefore in accordance with a first aspect is disclosed an electrode for capacitive deionization having:

(i) an adsorbent having specific surface area of 100 to 1300 $m^2/g$;
(ii) a conductive carbon black; and,
(iii) a binder;

wherein said adsorbent is pre-impregnated with a substance selected from gold, silver, copper and platinum and wherein percentage of the substance pre-impregnated on said adsorbent is 0.2% to 0.8 % by weight of the adsorbent.

## DETAILED DESCRIPTION

The disclosed electrode for capacitive deionization includes

(i) an adsorbent having specific surface area of 100 to 1300 $m^2/g$;
(ii) a conductive carbon black; and,
(iii) a binder;

wherein the adsorbent is pre-impregnated with a substance selected from gold, silver, copper and platinum and wherein percentage of the substance pre-impregnated on said adsorbent is 0.2 % to 0.8 % by weight of the adsorbent.

Capacitive deionisation is a newer technology for deionisation of brackish water typically having TDS of 300 to 3000 ppm. The working principle is electro-sorption or electro-adsorption, where ions present in water get adsorbed on the electrodes under the influence of applied electric field. A typical cycle of capacitive deionisation includes a purification step and a regeneration step.

The process of capacitive deionisation requires electrodes as a substrate for the electrosorption of ions to lower the total dissolved solids contained in input water.

Thy adsorbent

The preferred adsorbent is selected from activated carbon, high specific surface area graphite (HSAG), carbon nanotubes (CNT), activated charbon fiber, a cation exchange resin, zeolites, smectite or vermiculite. A particularly preferred adsorbent is activated carbon. It is preferred that the activated carbon is obtained from bituminous coal, coconut shell, wood or petroleum tar. Preferably the surface area of activated carbon is greater than 500 $m^2/g$; more preferably greater than 1000 $m^2/g$. It is preferred that the size uniformity co-efficient of the activated carbon is less than 2, more preferably less than 1.5.

It is preferred that the Carbon Tetrachloride number of activated carbon is more than 50 %, more preferably greater than 60% has. It is further preferred that iodine number of the activated carbon is more than 800 units, more preferably greater than 1000 units. Further preferably the particle size of the activated carbon is 75 to 300 $\mu$m, preferably from 100 to 250 $\mu$m.

Modified forms of activated carbon including carbon cloth, carbon felt, carbon aerogel can also be used in place of or in addition to the activated carbon.

Conductive Carbon Black

The conductive carbon black is a form of elemental carbon. Conductive carbon black is mostly produced by the oil furnace process from liquid aromatic hydrocarbons. In selecting carbon black for electrodes, the preferred and the important factors are total surface area and mesopore surface area, structure and surface oxidation.

The total surface area of the conductive carbon black is preferably greater than 500 $m^2/g$. Further, it is preferred that mesopore area of the conductive carbon black is greater than 100 $m^2/g$, more preferably in the range of 100 $m^2/g$ to 1000 $m^2/g$.

Structure of carbon black is characterized by its Oil Absorption Number (OAN). It is preferred that OAN of carbon black is 45 to 400 $cm^3/100$ grams, more preferably 100 to 400 $cm^3/100$ g, further more preferably 250 to 400 $cm^3/100$ g. It is preferred that the conductive carbon black has lower amount of chemisorbed oxygen on its surface thereof.

Suitable grades of carbon black may be selected from TIMCAL Graphite 5 Carbon (Grades: Ensaco™ 250G, Ensaco™ 350) or from Cabot Corporation (Grades: Regal™, Black Pearl™ 2000, Vulcan), or from Evonovik (Grade:

PRINTEX™ XE-2), or from Akzo Nobel (Ketjen Black).

The binder

The electrode also contains a binder. Preferably the binder is thermoplastic. The term thermoplastic binder means a binder having melt flow rate (MFR) less than 5 g/10 minutes, more preferably less than 2 g/10 minutes, further more preferably less than 1 g/10 minutes. Bulk density of the binder is preferably less than or equal to 0.6 g/cm$^3$, more preferably less than or equal to 0.5 g/cm$^3$, and further more preferably less than or equal to 0.25 g/cm$^3$.

Suitable examples include ultra high molecular weight polymer preferably polyethylene, polypropylene and combinations thereof, which have these low MFR values. The molecular weight is preferably in the range of 10$^6$ to 10$^9$ g/mole. Binders of this class are commercially available under the trade names HOSTALEN from Tycona GMBH, GUR, Sunfine (from Asahi, Japan), Hizex (from Mitsubishi) and from Brasken Corp (Brazil). Other suitable binders include LDPE sold as Lupolen (from Basel Polyolefins) and LLDPE from Qunos (Australia).

It is preferred that the thermoplastic binder is not a fibrillated polymer e.g. polytetrafluoroethylene (PTFE).

It is preferred that the particle size of the thermoplastic binder is in the range of 20 to 60 $\mu$m, preferably 40 to 60 $\mu$m. Preferred electrodes contain 8 to 30 wt%, more preferably in 10 to 30 wt%, further more preferably 12 to 28 wt% by weight binder.

The ratio of activated carbon: binder: conductive carbon black is preferably in the range of 5:2:3 to 8:1:0.5, more preferably in the range of 7:2:1 by weight.

The substance

In the disclosed filters, the adsorbent is pre-impregnated with a substance selected from gold, silver, copper and platinum.

It is believed that increased electrical conductivity of the adsorbent due to the presence of such a substance provides enhanced recovery and greater reduction in total solids and provides more energy efficiency. It is believed that the increase electrical conductivity:reduces resistance of the active material thereby leading to lesser potential drop inside the material and consequently greater potential is developed at the electrode-solution interface. This phenomenon increases the capacity of the electrodes to lower the salt (TDS) content It also increases the kinetics of the process of removal of salts. As a result, it is believed that the recovery of the capacitive deionization system increases.

The percentage of the substance pre-impregnated on the adsorbent, such as activated carbon, is 0.2 % to 0.8 % by weight of the adsorbent, more Preferably 0.2 to 0.5 wt% of the absorbent Silver is particularly preferred. Silver has conductivity of $6.3 \times 10^7$ S/m and standard reduction potential of 0.8 V with respect to the Standard Hydrogen Electrode. The adsorbent used is pre-impregnated with the substance.

Further details of the electrode

The electrode of the first aspect of the invention is preferably obtainable by the process according to the second aspect of the invention.

In order to use the electrodes they are usually cut to required size. This size depends on the size of the corresponding capacitive deionisation cell in which the electrodes are assembled. Usually the electrodes are assembled in the order of pairs, such as 11 pairs, 13 pairs and preferably up to 25 pairs. Beyond 25 pairs, the hydraulic resistance of the arrangement of electrodes becomes too high which causes more pressure drop. Second reason is there is often some lag between the charging cycle and the exit of purified water from the system because the path length defined by the arrangement of electrodes is too high. In a preferred method, water is passed through 8 to 25 pairs of electrodes. It is normally the case that of the total number of electrodes, a sizeable number is double sided electrodes and most often when "n" pairs of electrodes are used; the number of double sided pairs is "n-1" leaving the balance one pair to be used as single sided electrodes, which, in an assembly or stack, are placed one each as the terminal electrodes.

It is particularly preferred that of all the pairs of electrodes, a major portion of the electrodes are double-sided and correspondingly a minor portion of the electrodes are single-sided.

While it is preferred to have parallel arrangement of electrodes, they could also be arranged in series.

It is preferred that thickness of each double-sided electrode is 1 to 6 mm preferably 2 to 5 mm and more preferably 3 to 4 mm. It is preferred that thickness of each single-sided electrode is 1 to 3 mm.

A non-conducting material, such as nylon cloth is preferably used to prevent direct contact between the electrodes. It is particularly preferred that the gap between two adjacent electrodes is upto 1 mm.

Further detailed account of electrodes can be found in WO2009/077276 A1 (Unilever).

As the adsorbent, such as carbon, is pre-impregnated with the substance such as Silver, there is no need for any further post-treatment like coating of the electrodes after they are formed.

Description of a capacitive deionisation cell

In order to use the electrodes, they need to be assembled to form a cell called as a capacitive deionisation cell. The method to form a cell is briefly described.

Usually in such a cell a pair of electrodes is connected to respective positive and negative potential. An enclosure surrounds the capacitive deionisation cell which has provision for the water to flow in and out of the cell. The enclosure also provides for making connections externally to the electrodes in the cell.

Any known means may be used for the input of water into the cell. Water is generally fed through a reservoir or by an inline source of water and a pump. For example, the water stored in the reservoir is fed into the capacitive deionisation cell or the capacitive deionisation cell is connected to a direct source of water such as a tap.

Where pumps are used, water can be pumped under flow rate of 1 to 1500 ml/minute, more preferably 10 to 300 ml/min. More common flow rate is about 55 ml/minute to 200 ml/minute. It is preferred that the water is pre-filtered to render it free of organic materials and particulate impurities. Suitable filtration means can be adopted.

Power Supply

A power supply is necessary. Power can be supplied by any means. However it is preferred that power is supplied by a programmable DC system for supplying DC voltage and for applying pre-programmed timed steps like short-circuiting, charging and discharging.

It is preferred that the voltage applied across the electrodes during the charging step is 0.1 to 10 V, more preferably from 0.8 to 8 V and still more preferably from 1.0 to 6 V. In the discharging step, when the charges on the electrodes are reversed albeit only for a brief period, the preferred applied voltage is -0.1 to -10 V more preferably from -0.8 to - 8 V and still more preferably from -1.0 to - 6 V.

Measuring the TDS

A conductivity meter is used to measure the concentration of salts in water and with suitable electronic programs; the TDS is directly calculated and displayed. Preferably two such meters are used. A first conductivity meter located before the capacitive deionisation cell measures the concentration of the salts in the input water. A second conductivity meter located after the cell measures concentration of the salts in output water. This second conductivity meter is connected to an electronic processor. The electronic processor receives electrical signal from the conductivity meter and it converts the electrical signal from the conductivity meter into TDS. It is preferred that conductivity is measured at regular intervals of e.g. one second, which can be controlled by the electronic processor.

In order to provide some means for controlling the output of water, a solenoid valve is generally used in such capacitive deionisation cells.

A solenoid valve is an electromechanically operated valve. The valve is controlled by an electric current through a solenoid. In the case of a two-port valve, the flow is switched on or off and in the case of a three-port valve; the outflow is switched between the two outlet ports. Solenoid valves are the most commonly used control elements in fluid flow.

It is preferred that a 3-way solenoid valve is used of which one port is for input of water and other two are for output. It is preferred that the solenoid valve is connected to the conductivity meter having a relay switch. When TDS is more than the preset limit, the flow-through of water is normally closed and the water comes from an output port. When the TDS is lowered below the pre-set point, the relay switch is turned on and the current flows to the solenoid valve which then switches the flow path to another port.

The electronic processor controls the opening of the specific port of the solenoid valve based on the measured input and output TDS levels and the pre-determined pre-set points for TDS. It is preferred that the TDS of input water is 700 to 800 ppm but the TDS could vary depending on the source of water. It is preferred that the TDS is lowered to at least 30 % of its initial level after deionisation, e.g. reduction from an initial input level of 100 ppm to at least 30 ppm in the output water.

If the electrodes fail to provide lowering by 30 %, then the electrodes may need an intervention. In other words, if the input TDS is 100 ppm and the output TDS is above 70 ppm, the electrodes may need an intervention.

It is preferred that the pre-set upper limit of TDS (i.e. maximum allowable TDS) is 550 ppm, more preferably 300 ppm. A drastic reduction in TDS so as to completely remove all the dissolved salts is not desirable. Water devoid of any dissolved solids usually tastes insipid.

Therefore, the $TDS_{set}$ is minimum 150 ppm. This means that it is preferable to have to minimum of 150 ppm TDS in the output water.

The electrode in use

In use, a capacitive device having two or more electrodes is arranged in series. Each electrode has a first face, an opposing second face and thickness defined by an outer surface extending from the first face to the opposing second face. A first current collector is in electrical contact with the outer surfaces of one or more of the electrodes and insulated from one or more other electrodes through contact with a compliant material disposed between the first current collector and the outer surfaces of one or more other electrodes. A second current collector is in electrical contact with one or more of the electrodes insulated from the first current collector.

A typical method of purification of water has repeating series of cycles during which input water is passed through at least one pair of oppositely charged electrodes, each cycle has:

(i) a charging step;
(ii) a first short-circuiting step;
(iii) a discharging step consisting of reversal of the charges on the electrodes; and
(iv) a second short-circuiting step.

Reversal of applied polarity before ten cycles makes the process inefficient. This is because after change in polarity the system takes a few cycles (termed as waste cycles) to stabilize and perform to its maximum efficiency. Therefore if the polarity is reversed frequently, the number of waste cycles increases which would render the process inefficient. Reversal of charges after twenty cycles would not produce the desired effect as the electrodes would by then have adsorbed more ions.

In the charging step, ions which are present in input water get adsorbed to the surface of the electrodes. In a preferred method, duration of the charging step is for 1 to 25 minutes, more preferably 6 to 18 minutes, further more preferably 12 to 18 minutes. This duration for each step depends on the type of electrodes, the material of their construction, their dimensions, the applied voltage and the TDS of water which is to be treated.

The first short-circuiting step helps to equalize or neutralize the charges adhering to the electrodes so that the ions can pass into the bulk of the water. In a preferred method, duration of the first short-circuiting step is 2 to 60 seconds, more preferably 8 to 15 seconds and most preferably 10 to 15 seconds.

Even after the first short-circuiting step, some ions may still adhere to the electrodes, among other reasons, due to the non specific driving force for desorption. This is achieved by the discharging step which consists of reversal of the applied charge on the electrodes for a brief period which helps release ions adsorbed by the residual charge of the electrodes. Such ions are then readily released by the repulsive electric forces.

This step also regenerates the electrodes for further use. In a preferred method, the 5 duration of the discharging step is 5 to 20 seconds, more preferably 8 to 15 seconds. The second short-circuiting step helps further neutralize residual charges. In a preferred method duration of the second short-circuiting step is for 4 to 20 minutes, more preferably for 12 to 18 minutes. This step further drives the ions away from the electrodes to the bulk of the water,

Process for preparation of the electrode:

In accordance with another aspect is provided a process for preparing an electrode of the first aspect for capacitive deionisation of water, having the steps of:

(i) forming a mixture of 60 to 88 parts by weight of an adsorbent having specific surface area of 100 m27g to 1300 $m^2$/g, 5 to 30 parts by weight of thermoplastic polymeric binder and 2 to 20 parts by weight of conductive carbon black and including a fluid to said mixture wherein amount of said fluid is not more than four times the weight of said mixture;
(ii) casting the composition obtained in step (i) in a mould;
(iii) compressing the mould;
(iv) heating the mould to a temperature in the range 150 to 350 °C; and,
(v) demoulding the moulded electrode,
wherein said adsorbent is pre-impregnated with a substance selected from gold, silver, copper and platinum and wherein percentage of the substance pre-impregnated on said adsorbent is 0.2 % to 0.8 % by weight of the adsorbent

In a preferred process, the fluid is water. Further preferably, casting of the composition is done using a mould to form a sheet, more preferably casting of the composition is done over a current collector in the mould. A preferred current collector is selected from graphite, aluminium or titanium. During the process, it is preferred that temperature of the mould is 200 to 300 °C. It is preferred that the mould is compressed to pressure not greater than 30 kg/cm$^2$ before heating the mould. Further preferred pressure is from 12 to 25 kg/cm$^2$.

The disclosed process results in a more or less homogeneous mix, unlike a layered block or layered moulded article.

According to yet another aspect is provided a water purification system having an electrode of the first aspect for capacitive deionisation of water.

According to yet another aspect is provided a gravity-fed water purification device for removal of dissolved salts from water comprising a housing having a plurality of electrodes of the first aspect wherein the electrodes are connected to a source of DC power to provide voltage less than 1.4 V potential across the electrodes.

Method for purification of water

During purification, positive and negative potential is applied across the electrodes and the counter-ions which are present in water get attracted to the electrodes of corresponding opposite charge. This effect leads to lowering in the ions which are present in the input water.

In the regeneration step, the charge on the electrodes is reversed (or the electrodes are short-circuited). In this step, ions get desorbed from the electrodes and pass into the flowing water due to electrostatic repulsion. During this step, a greater amount of ions is present in the water. Such water is generally not fit for consumption therefore commercial devices have built-in mechanisms to discard this water.

According to a third aspect there is provided a device for desalination of water comprising a housing including a plurality of electrodes molded from a composition comprising 60 to 88 wt% by weight of activated carbon with a particle size range of 75 to 300 $\mu$m, 5 to 30 % by weight of thermoplastic polymeric binder with a particle size range of 20 to 60 $\mu$m and 2 to 30 wt% conductive carbon black wherein said electrodes are connected to a source of DC power to provide voltage lower than 1.4 V potential.

Further details of the invention will now be explained with reference to non-limiting examples.

**EXAMPLES**

Example 1: Process for making an electrode

The electrodes were prepared by a wet mixing process followed by a thermal anneal. Powdered activated carbon (specific surface area 885 $m^2$/g) containing impregnated thereon 0.2 % silver (supplied by Active Carbon Ltd), a binder (high density poly ethylene, supplied by Ticona) and conductive carbon black (BET surface area 770 2 m /g, conductivity ~ 0.05 S/cm, supplied by TIMCAL) were mixed in the ratio 70:20:10 (i.e. 7:2:1) with de-ionized water to form slurry. The slurry was spread in the required dimensions on a graphite sheet of thickness 0.3 mm and kept in hot air oven at 200 °C for 2 hours.

Example 2 : Single cell desalination

Single cell desalination studies were conducted on the electrodes of Example 1 as well as comparative electrodes (devoid of impregnated silver) on the powdered activated carbon.

Example 3

Another set of electrodes were prepared with a higher doping level of silver in powdered activated carbon (1 % as against 0.2% above).

The input water for all the experiments was borewell water containing 815 ppm TDS. The water was free of colloids, organic materials and particulate matter. DC voltage of 1.2 V was applied to the cell. The flow rate of input water was fixed at 10 ml/minute.

The desalination experiments were performed by cycling the electrodes through a process consisting of applying a potential for 16 minutes (T1), a shorting stage for 10 seconds (T2), a reverse potential step for 10 seconds (T3) and a shorting state for 8 minutes (T4).

During T1, a positive voltage was applied to one of the electrodes and negative voltage at the other electrode, and during T3 the polarities of electrodes were reversed. During the shorting state, no voltage was applied across the electrodes and the terminals of the electrode were shorted.

The performance of the electrode material was determined by observing the reduction in TDS and the recovery using the following equations:

$$\text{Salt removal (\%)} = [1-(TDS_{input}/TDS_{output})]*100$$

$$\text{Recovery (\%)} = [\text{Volume of purified water/volume of input water}]*100$$

The output water was considered to be pure when the TDS was below 550 ppm ($TDS_{set}$). The data is shown in table 1.

Table 1: Single cell data

| Electrode | T1 | T2 | T3 | T4 | Average salt removal (%) | Average recovery (%) |
|---|---|---|---|---|---|---|
| Example 1 | 16 | 10 | 10 | 480 | 33 | 20 |
| | 16 | 10 | 10 | 480 | | |
| | 16 | 10 | 10 | 480 | | |
| Example 2 | 16 | 10 | 10 | 480 | 29 | 7 |
| | 16 | 10 | 10 | 480 | | |
| | 16 | 10 | 10 | 480 | | |
| Example 3 | 16 | 10 | 10 | 480 | 19 | 0 |
| Note: In table 1, the time T1 is in minutes and T2 to T4 are in seconds. | | | | | | |

The inclusion of silver significantly improved performance of the cell (example 2 compared to example 1). This is believed to be because silver impregnated carbon decreases the resistance of the active material helping better express the applied potential at the electrode-solution interface to adsorb the ions.

While adding more silver improves conductivity to some extent, it also reduces the capacitance at higher doping of silver which leads to poorer performance (example 3 compared to examples 1 and 2).

Examples 4 and 5 - Performance in a stack of electrodes:

An experiment was also performed on a stack (arrangement) of eleven pairs of electrodes, where individual cells were arranged in parallel configuration.

A potential of 4.4 V was applied across the stack keeping the flow rate at 110 ml/minute. The limit of TDS ($TDS_{set}$) was fixed at 550 ppm.

Electrodes prepared in accordance with Example 1 were used for Example 4.

Electrodes prepared in accordance with Example 2 were used for Example 5.

Table 3

| Example | average salt removal % | average recovery % | throughput for the salt removal to fall to 45 % (litres) | time required for 46% TDS removal in the charging cycle (seconds) |
|---|---|---|---|---|
| 4 | 50 | 56 | 225 | 225 |
| 5 | 40 | 46 | 110 | 375 |

The improvement in the performance was also observed when the electrode cell was scaled into a stack (configuration) of 11 pairs of electrodes, both in terms of absolute increase in the lowering of TDS and the recovery as well as in the relative drop in performance over the life of electrodes. Further, the kinetics of adsorption also improved as shown by the lesser time required to bring about the desired drop in the TDS.

**Claims**

1.   An electrode for capacitive deionization comprising:

(i) an adsorbent having specific surface area of 100 m$^2$/g to 1300 m$^2$/g;
(ii) conductive carbon black; and
(iii) a binder;

wherein said adsorbent is pre-impregnated with a substance selected from gold, silver, copper, and platinum and wherein percentage of the substance pre-impregnated on said adsorbent is 0.2 % to 0.8% by weight of the adsorbant.

2. An electrode as claimed in claim 1 wherein said adsorbent is selected from activated carbon, high specific surface area graphite (HSAG), carbon nanotubes (CNT), activated carbon, activated carbon fiber, a cation exchange resin, zeolite, smectite or vermiculite.

3. An electrode as claimed in claim 2 wherein said adsorbant is activated carbon.

4. An electrode as claimed in any one of claims 1 to 3 wherein said substance is silver.

5. An electrode as claimed in any one of the preceding claims 3 to 4 wherein ratio of activated carbon: binder: conductive carbon black is in the range of 5:2:3 to 8:1:0.5.

6. An electrode as claimed in any one of the preceding claims wherein said binder is a thermoplastic binder.

7. Use of an electrode as claimed in any one of the preceding claims for purification of water.

8. A process for preparing an electrode for capacitive deionisation of water as claimed in any one of claims 1 to 6 comprising the steps of:

(i) forming a mixture of 60 to 88 parts by weight of an adsorbent having specific surface area of 100 m$^2$/g to 1300 m$^2$/g, 5 to 30 parts by weight of thermoplastic polymeric binder and 2 to 20 parts by weight of conductive carbon black and including a fluid to said mixture wherein amount of said fluid is not more than four times the weight of said mixture;
(ii) casting the composition obtained in step (i) in a mold;
(iii) compressing said mold;
heating said mold to a temperature in the range 150 to 350°C; and,
(iv) demoulding the moulded electrode,

wherein said adsorbent is pre-impregnated with a substance selected from gold, silver, copper, and platinum and wherein percentage of the substance pre-impregnated on said adsorbent is 0.2 % to 0.8 % by weight of the adsorbent.

9. A process as claimed in claim 8 wherein the fluid is waster

10. A gravity-fed water purification device for removal of dissolved salts from water comprising a housing having a plurality of electrodes as claimed in any one of claims 1 to 6 wherein said electrodes are connected to a source of DC power to provide voltage less than 1.4 V potential across the electrodes.

**Patentansprüche**

1. Elektrode für kapazitive Entionisierung, umfassend:

(i) ein Adsorbens mit einem spezifischen Oberflächenbereich von 100 m$^2$/g bis 1300 m$^2$/g;
(ii) leitfähigen Ruß und
(iii) ein Bindemittel,

wobei das Adsorbens mit einer unter Gold, Silber, Kupfer und Platin ausgewählten Substanz vorimprägniert ist und wobei der Prozentgehalt der auf das Adsorbens vorimprägnierten Substanz 0,2% bis 0,8 Gew.-% des Adsorbens beträgt.

2. Elektrode nach Anspruch 1, wobei das Adsorbens unter Aktivkohle, Graphit mit hohem spezifischen Oberflächenbereich (HSAG), Kohlenstoffnanoröhren (CNT), Aktivkohle, aktivierter Carbonfaser, einem Kationenaustauschharz, Zeolith, Smectit oder Vermiculit ausgewählt ist.

3. Elektrode nach Anspruch 2, wobei das Adsorbens Aktivkohle ist.

4. Elektrode nach irgendeinem der Ansprüche 1 bis 3, wobei die Substanz Silber ist.

5. Elektrode nach irgendeinem der vorhergehenden Ansprüche 3 bis 4, wobei das Verhältnis der Aktivkohle : Bindermittel : leitfähiger Ruß in dem Bereich von 5:2:3 bis 8:1:0,5 liegt.

6. Elektrode nach irgendeinem der vorhergehenden Ansprüche, wobei das Bindemittel ein thermoplastisches Bindemittel ist.

7. Verwendung einer Elektrode nach irgendeinem der vorhergehenden Ansprüche zur Reinigung von Wasser.

8. Verfahren zur Herstellung einer Elektrode für kapazitive Entionisierung von Wasser nach irgendeinem der Ansprüche 1 bis 6, umfassend die Schritte:

(i) Ausbilden einer Mischung von 60 bis 88 Gewichtsteilen eines Adsorbens mit einem spezifischen Oberflä-chenbereich von 100 $m^2/g$ bis 1300 $m^2/g$, 5 bis 30 Gewichtsteilen thermoplastisches polymeres Bindemittel und 2 bis 20 Gewichtsteilen eines leitfähigen Rußes und Einbeziehen einer Flüssigkeit in die Mischung, wobei die Menge der Flüssigkeit nicht mehr als viermal des Gewichts der Mischung beträgt,
(ii) Gießen der im Schritt (i) erhaltenen Mischung in eine Form,
(iii) Komprimieren der Form;
Erhitzen der Form auf eine Temperatur in dem Bereich von 150 bis 350°C und
(iv) Entformen der geformten Elektrode,

wobei das Adsorbens mit einer unter Gold, Silber, Kupfer und Platin ausgewählten Substanz vorimprägniert wird und worin der Prozentgehalt der auf das Adsorbens vorimprägnierten Substanz 0,2% bis 0,8 Gewichts-% des Adsorbens beträgt.

9. Verfahren nach Anspruch 8, wobei die Flüssigkeit Wasser ist.

10. Wasserreinigungsvorrichtung mit Schwerkraftzuführung zum Entfernen gelöster Salze aus Wasser, umfassend ein Gehäuse mit einer Vielzahl von Elektroden nach irgendeinem der Ansprüche 1 bis 6, wobei die Elektroden mit einer Stromquelle von Gleichstromenergie verbunden sind, um eine Spannung von weniger als 1,4 V Potential über die Elektroden zu liefern.

**Revendications**

1. Electrode pour désionisation capacitive comprenant :

(i) un adsorbant présentant une surface spécifique de 100 $m^2/g$ à 1300 $m^2/g$ ;
(ii) un noir de carbone conducteur ; et
(iii) un liant ;

dans laquelle ledit adsorbant est pré-imprégné avec une substance choisie parmi l'or, l'argent, le cuivre, et le platine et dans laquelle le pourcentage de la substance pré-imprégnée sur ledit adsorbant est de 0,2 % à 0,8 % en masse de l'adsorbant.

2. Electrode selon la revendication 1, dans laquelle ledit adsorbant est choisi parmi du charbon actif, du graphite de surface spécifique élevée (HSAG), des nanotubes de carbone (CNT), du charbon actif, une fibre de charbon actif, une résine échangeuse de cations, une zéolite, la smectite ou la vermiculite.

3. Electrode selon la revendication 2, dans laquelle ledit adsorbant est le charbon actif.

4. Electrode selon l'une quelconque des revendications 1 à 3, dans laquelle ladite substance est l'argent.

**5.** Electrode selon l'une quelconque des revendications 3 à 4 précédentes, dans laquelle le rapport charbon actif : liant : noir de carbone conducteur se trouve dans l'intervalle de 5 : 2 : 3 à 8 : 1 : 0,5.

**6.** Electrode selon l'une quelconque des revendications précédentes, dans laquelle ledit liant est un liant thermoplastique.

**7.** Utilisation d'une électrode selon l'une quelconque des revendications précédentes pour la purification d'eau.

**8.** Procédé de préparation d'une électrode pour désionisation capacitive d'eau selon l'une quelconque des revendications 1 à 6 comprenant les étapes consistant :

(i) à former un mélange de 60 à 88 parties en masse d'un adsorbant ayant une surface spécifique de 100 $m^2$/g à 1 300 $m^2$/g, de 5 à 30 parties en masse de liant polymère thermoplastique et de 2 à 20 parties en masse de noir de carbone conducteur et à inclure un fluide audit mélange dans lequel la quantité dudit fluide n'est pas supérieure à quatre fois la masse dudit mélange ;
(ii) à couler la composition obtenue dans l'étape (i) dans un moule ;
(iii) à comprimer ledit moule ;
à chauffer ledit moule à une température dans l'intervalle de 150 à 350°C ; et,
(iv) à démouler l'électrode moulée,

dans lequel ledit adsorbant est pré-imprégné avec une substance choisie parmi l'or, l'argent, le cuivre, et le platine et dans lequel le pourcentage de la substance pré-imprégnée sur ledit adsorbant est de 0,2 % à 0,8 % en masse de l'adsorbant.

**9.** Procédé selon la revendication 8, dans lequel le fluide est l'eau.

**10.** Dispositif de purification d'eau alimenté par gravité pour l'élimination de sels dissous de l'eau comprenant un boîtier présentant plusieurs électrodes selon l'une quelconque des revendications 1 à 6 dans lequel lesdites électrodes sont connectées à une source d'alimentation continue pour fournir une tension inférieure à un potentiel de 1,4 V à travers les électrodes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012187054 A1
- EP 1601617 B1
- WO 2008016671 A1
- DE 10013457 A1
- WO 2009077276 A1